# EUROPEAN PATENT APPLICATION

(11) **EP 3 228 404 A1**
(43) Date of publication of application: **11.10.2017**
(21) Application number: 14909274.4
(22) Date of filing: 30.12.2014
(51) Int. Cl.: B22F 3/105, B23K 26/38, B23P 23/04, B29C 67/00, B33Y 30/00

(54) **MULTI-ELECTRON-BEAM MELTING AND MILLING COMPOSITE 3D PRINTING APPARATUS**

(71) Applicant: Yuanmeng Precision Technology (Shenzhen) Institut, Shenzhen, Guangdong 518000 (CN)
(72) Inventor: XU, Yi, Shenzhen Guangdong 518000 (CN); LI, Junqi, Shenzhen Guangdong 518000 (CN); NIE, Yan, Shenzhen Guangdong 518000 (CN)
(86) International application number: PCT/CN2014/095719
(87) International publication number: WO 2016/106615

(57) **Abstract**

The present application relates to the technical field of 3D printing apparatuses, and discloses a multi-electron-beam melting and milling composite 3D printing apparatus, which comprises a base; wherein the base is provided with a machining platform; the base is further provided with a powder spreading structure; a plurality of electron beam emitting structures and a milling head are arranged above the machining platform; the plurality of electron beam emitting structures are spacedly and circumferentially arranged outside the milling head; the plurality of electron beam emitting structures are configured for emitting electron beams to melt the metal powder layer in partitions and thereby form a plurality of single-layer or multi-layer approximate bodies; the milling head is configured for milling the plurality of single-layer or multi-layer approximate bodies. The 3D printing apparatus integrates the removal machining taking laser milling as the main method and the incremental laminating manufacturing process taking electron beam melting 3D printing as the main method together; in this way, the defects of the 3D printing technology in aspects such as size and shape accuracy are overcome; aiming at a component with a large dimension, the plurality of electron beams melt perform melting machining in different portions, and the milling head further perform a milling machining, such that the forming of the component having a large dimension is realized.

## Description

### TECHNICAL FIELD

The present application relates to the technical field of 3D (three-dimensional) printing apparatuses, and more particularly, relates to a multi-electron-beam melting and milling composite 3D printing apparatus.

### BACKGROUND

Metal melting 3D printing technology (Selective Laser Melting, SLM) is a kind of technology using high-brightness laser to directly melt metal power materials, and directly forming a component with any complicated structure, which has properties similar to a casting, via a 3D model, without adhesives.

By means of the metal melting 3D printing technology, a component having a strength level reaching that of a casting can be formed. However, the formed component has a large shape error and a poor surface finish; therefore, the formed component needs to be machined secondarily using a traditional machining method, only by this can the component obtain a shape and a surface accuracy meeting the requirements of aviation manufacturing industry. Besides, most components used in the aerospace industry, such as engine nozzles, blades, cellular combustion chambers or the like, are complicated thin-wall structures or truss core structures, or have a relatively large shape, or are in a shape of a free-form surface or the like; when a component produced by the metal melting 3D printing technology is further put onto a lathe for a secondary machining, the following problems may exist:
1) clamping is difficult, or after clamping, the machining error is large because it is impossible to position reference points of the component accurately due to a transformation of coordinates;
2) for a component having a thin-wall structure, during machining, stress deformation may occur in the component because there is no surface supporting the component;
3) some components may be difficult to machine because their inner structures are complicated and a tool is unable to enter the inside of such a component.

Due to the existence of the above problems, though the metal melting 3D printing technology has been applied into the producing and manufacturing of aircraft parts now, it has a narrow application range; it is only used for machining some components having low requirements for accuracies and strengths, or some components having simpler structures and being easy to be machined secondarily, and is far from being widely used.

Additionally, in the prior art, high-power electron beams are used to directly melt the metal powder materials, and a component having any complicated structure and properties similar to a forging is directly formed via a 3D model, without adhesives. However, due to the limitation to the deflection angles of the electron beams, the scanning area thereof is substantially smaller than 400mx400m , and thus it is impossible to form a component having a large dimension.

### BRIEF SUMMARY

The objective of the present application is to provide an multi-electron-beam melting and milling composite 3D printing apparatus, in order to solve the technical problems in the prior art that when the component produced by the metal melting 3D printing technology is further put onto a lathe for a secondary machining, clamping is difficult, machining errors are large, components are prone to deform, and machining is difficult, and that 3D printing using the electron beam melting technology is unable to form a component having a large dimension.

The present application is realized as follows: an multi-electron-beam melting and milling composite 3D printing apparatus, which comprises a base; wherein the base is provided thereon with a machining platform movable in a vertical direction; the base is further provided thereon with a powder spreading structure configured for spreading metal powder onto the machining platform to form a metal powder layer; a plurality of electron beam emitting structures and a milling head are arranged above the machining platform; the plurality of electron beam emitting structures are spacedly and circumferentially arranged outside the milling head; the plurality of electron beam emitting structures are configured for emitting electron beams to melt the metal powder layer formed on the machining platform in partitions and thereby form a plurality of single-layer or multi-layer approximate bodies; the milling head is configured for milling the plurality of single-layer or multi-layer approximate bodies formed on the machining platform, and integrally connecting the plurality of single-layer or multi-layer approximate bodies formed on the machining platform together.

In a preferred embodiment, the electron beam emitting structures each includes an electron beam generator configured to emit an electron beam and a coil configured to be electrified to generate a magnetic field; the electron beam emitted by the electron beam generator passes through the magnetic field generated by the coil.

In a preferred embodiment, the base is provided thereon with two guide rails arranged to be spaced from and parallel to each other; the machining platform is arranged between the two guide rails; the powder spreading device further includes a scrape and a powder leakage case located above the scraper; wherein two ends of the scraper are movably connected to the two guide rails respectively, and a gap is formed between a lower end of the scraper and the machining platform; the powder leakage case is further provided therein with a powder leakage cavity configured for receiving the metal powder, and a lower end of the powder leakage case defines a powder leakage hole; an upper end of the scraper is provided with a powder collection tank configured for collecting the metal powder falling from the powder leakage hole.

In a preferred embodiment, the powder spreading device includes two scrapers and two powder leakage cases; the two scrapers are respectively provided with a front end and a rear end of the machining platform, the two powder leakage cases are respectively arranged above the two scrapers.

In a preferred embodiment, the base is provided thereon with two guide rails arranged to be spaced from and parallel to each other; the machining platform is arranged between the two guide rails; the powder spreading device further includes a scrape and a powder storage case; wherein two ends of the scraper are movably connected to the two guide rails respectively, and a gap is formed between a lower end of the scraper and the machining platform; the powder storage case includes a powder storage cavity having an opening at an upper end thereof and configured for receiving the metal powder; the base defines a through-hole aligned with the opening at the upper end of the powder storage cavity; a powder transporting platform movable in the vertical direction and configured for transporting the metal powder to the base is further arranged in the powder storage cavity of the powder storage case; the powder transporting platform is respectively aligned with the opening at the upper end of the powder storage cavity and the through-hole in the base.

In a preferred embodiment, sensors configured for detecting a thickness of the metal powder layer spread on the machining platform are respectively arranged on two sides of the machining platform.

In a preferred embodiment, the milling head is a laser milling head; a portal frame is movably connected with the two guide rails; the portal frame includes two connecting arms spaced from each other and a horizontal beam; lower ends respectively of the two connecting arms are movably connected to the two guide rails; two ends of the horizontal beam are connected to upper ends of the two connecting arms respectively; a moving terminal movable along the horizontal beam is movably connected to the horizontal beam, and a connecting plate that moves up and down with respect to the moving terminal is movably connected to the moving terminal; ; the laser milling head is connected to the connecting plate.

In a preferred embodiment, the laser milling head is further provided therein with a cooling line configured for allowing cooling water to flow through.

In a preferred embodiment, the milling head is a laser milling head; the laser milling head includes a laser generator configured for emitting a laser beam and a plurality of polarizers configured for emitting the laser beam emitted by the laser generator; the plurality of polarizers are arranged in an accommodating box.

In a preferred embodiment, the multi-electron-beam melting and milling composite 3D printing apparatus further includes a recovering case, the recovering case includes a recovering cavity configured for allowing the apparatus to recover the metal powder on the base; the recovering case is located below the base, and the base further defines a recovering opening communicated with the recovering cavity.

Compared with the prior art, in the multi-electron-beam melting and milling composite 3D printing apparatus provided by the present application, the electron beam emitted by the electron beam emitting structure is used to layer by layer melt the metal powder layer, the milling head is used to mill the plurality of single-layer or multi-layer approximate bodies, and the above steps are repeated until the machining of the component is finished. The 3D printing apparatus integrates a traditional removal accurate machining taking milling as a main method with an incremental laminating manufacturing process taking electron beam melting 3D printing as a main method together. Therefore, not only are the defects of the traditional 3D printing technology in aspects such as size and shape accuracy overcome, but also the restrictions of cutting machining to the complexity of components or the like are overcome too. In this way, the machined components do not need to be machined secondarily, and the problems of difficult clamping, large machining error, deformation of components occurring during machining, and difficult machining are avoided, the 3D printing technology achieves wider application space, and a new method and technical means are provided to the production and manufacturing of core and precision components in the aerospace industry. Furthermore, aiming at a component having a large dimension, it is possible to fully use the plurality of electron beams emitted from the plurality of electron beam emitting structures to perform melting machining in different portions, and thus use the milling head to perform milling machining for the plurality of formed single-layer or multi-layer approximate bodies. In this way, the forming of any component having a large dimension can be realized.

### BRIEF DESCRIPTION OF THE DRAWINGS

Fig. 1 is a perspective schematic view of a multi-electron-beam melting and milling composite 3D printing apparatus provided by an embodiment of the present application;
Fig. 2 is a briefly schematic view of a multi-electron-beam melting and milling composite 3D printing apparatus provided by an embodiment of the present application, wherein two electron beam emitting structures and one milling head are used;
Fig. 3 is a briefly schematic view of a multi-electron-beam melting and milling composite 3D printing apparatus provided by an embodiment of the present application, wherein three electron beam emitting structures and one milling head are used; and
Fig. 4 is a briefly schematic view of a multi-electron-beam melting and milling composite 3D printing apparatus provided by an embodiment of the present application, wherein four electron beam emitting structures and one milling head are used.

### DETAILED DESCRIPTION OF THE PREFERRED EMBODIMENT

In order to make the objective, the technical solution and the advantages of the present application more clear, the present application is further explained in detail with reference to the accompanying drawings and embodiments. It should be understood that, the specific embodiments described herein are only used for explaining the present application, and are not any limitation to the present application.

Embodiments of the present application are described in detail with reference to the specific embodiments in the following.

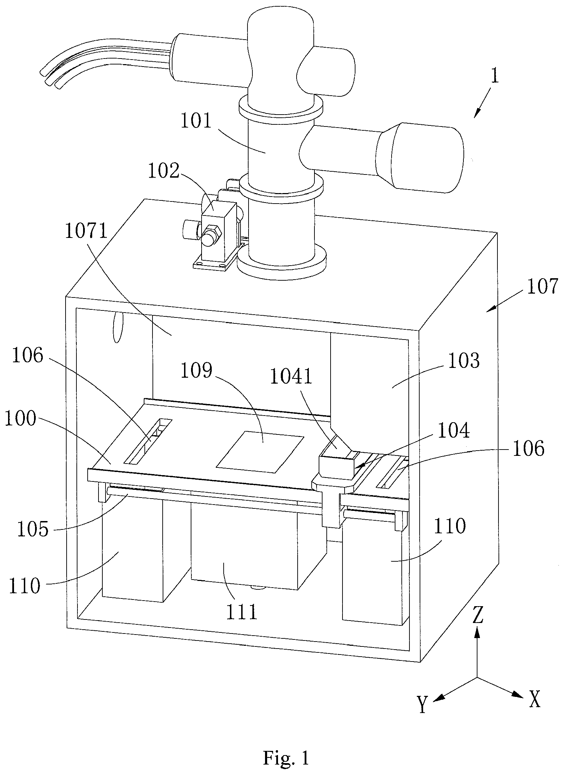

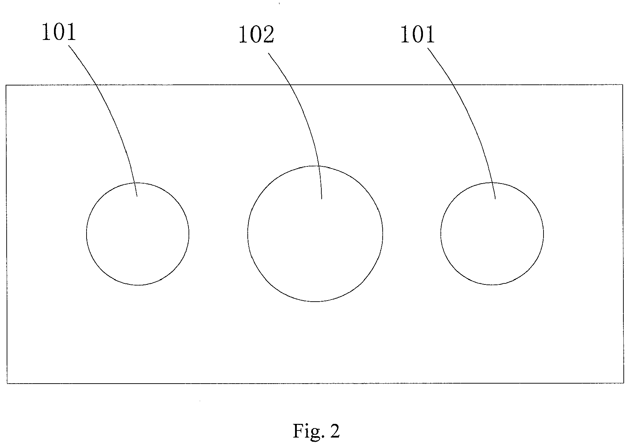

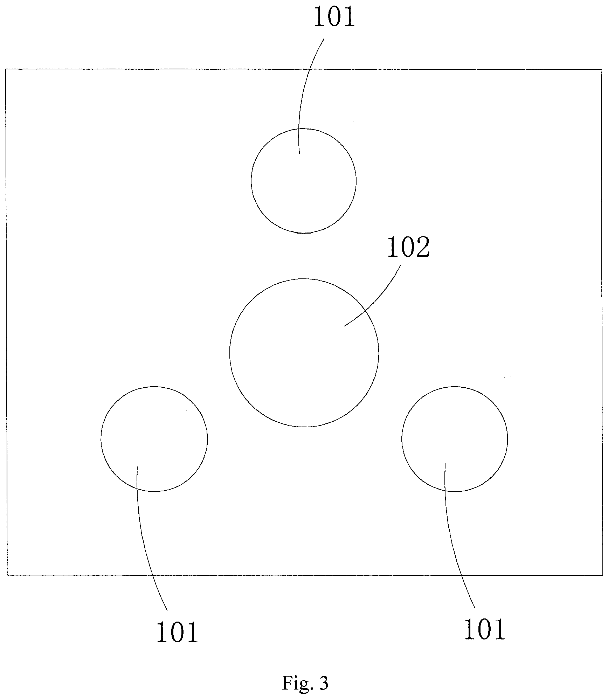

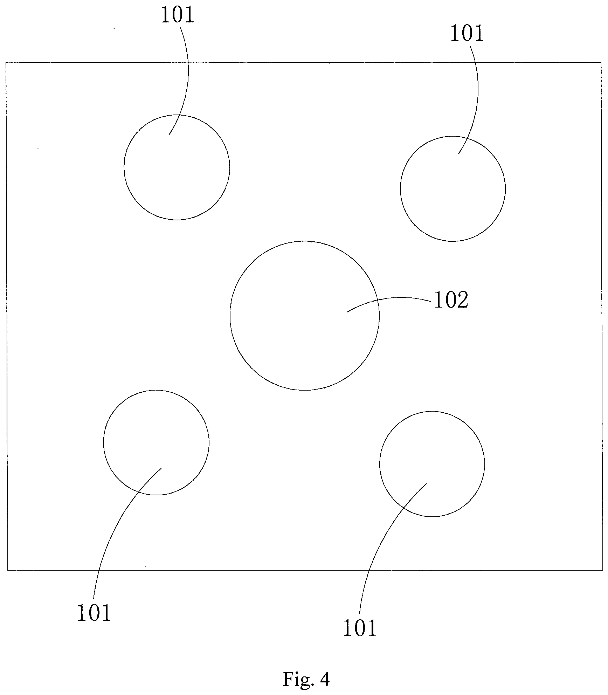

Figs. 1-4 show a preferred embodiment provided by the present application.

A 3D printing apparatus 1 provided by the present application combines milling machining with electron beam melting, and may be used to form various components, such as the components required in the aviation manufacturing industry, or the like.

The multi-electron-beam melting and milling composite 3D printing apparatus 1 comprises a base 100, a powder spreading device, a plurality of electron beam emitting structures 101 and a milling head 102. Wherein the base 100 is used as a foundation of the whole 3D printing apparatus 1 and has a bearing function. A machining platform 109 movable in a vertical direction is arranged on the base 100, and metal powder can be spread on the machining platform 109. The powder spreading structure is arranged on the base 100 and configured for transporting the metal powder or the like onto the machining platform 109, and the metal powder can form a metal powder layer on the machining platform 109. The plurality of electron beam emitting structures 101 are spacedly and circumferentially arranged outside the milling head 102. Each of plurality of electron beam emitting structures 101 is located above the machining platform 109 and emits an electron beam movable in a horizontal plane, and the electron beams are configured for respectively melting different portions of the metal powder layer formed on the machining platform 109 to form a plurality of single-layer or multi-layer approximate bodies.

The milling head 102 is also located above the machining platform 109, and is surrounded by the plurality of electron beam emitting structures 101. That is, the plurality of electron beam emitting structures 101 are spacedly and circumferentially arranged on a periphery of the milling head 102. The milling head 102 is configured for milling the plurality of single-layer or multi-layer approximate bodies formed on the machining platform 109 by melting, and integrally connecting the plurality of single-layer or multi-layer approximate bodies together.

As shown in Fig. 1, an XY plane parallel to the machining platform 109 is defined as a horizontal plane, a Z direction is defined as a vertical direction, and a plane perpendicular to the horizontal plane is defined as a vertical plane. In this way, the machining platform 109 is movable up and down in the Z direction. The electron beams emitted by the electron beam emitting structures 101 move in XY plane, and perform a melting forming process for the metal powder layer according to a preset moving path.

In the aforesaid multi-electron-beam melting and milling composite 3D printing apparatus 1, a plurality of electron beams emitted from a plurality of electron beam emitting structures 101 are adopted to carry out a 3D printing process. In this way, for a component having a large dimension, it is possible to use the plurality of electron beam emitting structures 101 to perform melting machining in partitions. Besides, the milling head 102 is used to mill the single-layer or multi-layer approximate bodies every time machined by the plurality of electron beam emitting structures 101, and to integrally connect the plurality of single-layer or multi-layer approximate bodies together. Therefore, the apparatus combine the 3D printing technology with the milling machining.

During the actual machining process, the specific operation processes include the following steps:
1) The metal powder is transported to the machining platform 109 and further spread onto the machining platform 109 by the powder spreading device in order to form a metal powder layer. Based on the 3D printing technology, the plurality of electron beam emitting structures 101 emit a plurality of electron beams to melt the metal powder layer on the machining platform 109, and single-layer or multi-layer approximate bodies are formed in a line-by-line and layer-by-layer stack manner. During the aforesaid process, partition processing for the component is realized. In this way, an appropriate number of electron beam emitting structures 101 can be arranged according to a coverage range of the electron beams emitted by the electron beam emitting structures 101 and the dimension of the component.
2) The milling head 102 mills the single-layer or multi-layer approximate bodies formed on the machining platform 109, so that dimensions and surface accuracies required by the single-layer or multi-layer approximate bodies are obtained. The milling head 102 further integrally connects the single-layer or multi-layer approximate bodies together.
3) The steps 1) and 2) are repeated, until the machining for the shape of the component is finished.

Every time after the steps 1) and 2) are finished, the machining platform 109 moves downwardly to a certain distance in order to ensure that the metal powder layer re-spread on the machining platform 109 is always at a same distance from focuses of the electron beams emitted by the electron beam emitting structures 101.

In the step 1), the plurality of electron beams emitted by the plurality of electron beam emitting structures 101 move in the horizontal plane, such that a plurality of single-layer or multi-layer approximate bodies are formed in the metal power layer on the machining platform 109. While in the step 2), the plurality of single-layer or multi-layer approximate bodies in various kinds are milled by the milling head 102 in all dimensions.

When using the multi-electron-beam melting and milling composite 3D printing apparatus 1 provided by the present embodiment, firstly the electron beams are used to layer by layer and in partitions melt the metal powder layer. Thus, the milling head 102 is used to mill the plurality of single-layer or multi-layer approximate bodies, and the above steps are repeated until the machining of the component is finished.

The 3D printing apparatus integrates a traditional removal accurate machining taking milling as the main method with an incremental laminating manufacturing process taking electron beam melting 3D printing as a main method together. Therefore, not only are the defects of the traditional 3D printing technology in aspects such as size and shape accuracy overcome, but also the restrictions of cutting machining to the complexity of components or the like are overcome too. In this way, the machined components do not need to be machined secondarily, and the problems of difficult clamping, large machining error, deformation of components occurring during machining, and difficult machining are avoided, the 3D printing technology achieves wider application space, and a new method and technical means are provided to the production and manufacturing of core and precision components in the aerospace industry.

In addition, aiming at components having large dimensions, it is possible to make full use of the plurality of electron beams emitted from the plurality of electron beam emitting structures 101 to perform melting machining in partitions, and thus use the milling head 102 to mill the plurality of formed single-layer or multi-layer approximate bodies. In this way, any component having a large dimension can be formed.

In this embodiment, the base 100 is provided thereon with two guide rails 105 spaced from and parallel to each other, and the two guide rails 105 are arranged on two sides of machining platform 109 respectively. The powder spreading device includes a scraper 104 and a powder leakage case 103. Two ends of the scraper 104 are movably connected to the two guide rails 105 respectively, such that the scraper 104 is movable in the horizontal plane along the guide rails 105. A gap is formed between a lower end of the scraper 104 and the machining platform 109.

In this case, the powder leakage case 103 is arranged above the base 100, and defines a powder storage cavity therein; the metal powder is stored in the powder storage cavity defined in the powder leakage case 103. A powder leakage hole communicated with the powder leakage cavity is defined at a lower end of the powder leakage case 103. Besides, a powder collection tank 1041 is arranged at an upper end of the scraper 104. The powder collection tank 1041 is arranged to be aligned with the powder leakage hole of the powder leakage case 103. In this way, the metal powder falling through the powder leakage hole of the powder leakage case 103 will fall into the powder collection tank 1041 of the scraper 104, and is further spread onto the machining platform 109 via the scraper 104, thereby forming a metal powder layer.

In specific, the powder leakage hole of the powder leakage case 103 is arranged to extend in strips. Besides, the powder collection tank 1041 of the scraper 104 extends in strips too. In this way, it can ensure that a width of the metal powder layer spread by the scraper 104 meets the usage requirements.

According to the actual machining requirements, a thickness of the metal powder layer every time spread on the machining platform 109 can be chosen, as long as the gap between the lower end of the scraper 104 and the machining platform 109 is adjusted.

Of course, for the structure provided with the powder leakage case 103 to achieve a powder leakage from up to down, the powder spreading structure includes two aforesaid scrapers 104 and two aforesaid powder leakage cases 103. In this way, two ends of each of the two scrapes 104 are movably connected to the two guide rails 105 respectively, and the two scrapers 104 are respectively arranged at a front end and a rear end of the machining platform 109. Of course, the two powder leakage cases 103 are respectively arranged above the front end and the rear end of the machining platform 109. In this way, when using the scrapers 104 to spread metal powder, it is possible to interactively operate the two scrapers 104, and thus the spreading efficiency is increased greatly.

Alternatively, in other embodiments, the powder spreading device can also include the aforesaid scraper 104 and a powder storage case. The powder storage case has a powder storage cavity with an opening at an upper end thereof, and the powder storage cavity of the powder storage case is configured for storing the metal powder. The powder storage case is located below the base 100, and a through-hole communicated with the opening at the upper end of the powder storage case is defined in the base 100; that is, the through-hole is aligned with the opening at the upper end of the powder storage case. Of course, the through-hole is also located between two guide rails 105.

A powder transporting platform movable up and down is further arranged in the powder storage case. The powder transporting platform is aligned with the opening at the upper end of the powder storage case and the through-hole in the base 100 respectively. In this way, when the metal powder layer needs to be spread onto the machining platform 109 by the scraper 104, the powder transporting platform carries the metal powder and moves upwardly, runs through the opening at the upper end of the powder storage case and the through-hole in the base 100, until the metal powder is exposed on the base 100. In this way, the scraper 104 can be used to scrape the metal powder to the machining platform 109, thereby forming a metal powder layer. Of course, the thickness of the metal powder layer every time formed on the machining platform 109 is in conformity to the gap between the lower end of the scraper 104 and the machining platform 109.

Of course, for the above operation adopting the cooperation of the scraper 104 and the powder storage case to achieve powder supply from down to up, it is also possible to arrange two aforesaid scrapers 104 and two aforesaid powder storage cases. Wherein, two ends of each of the two scrapes 104 are movably connected to the two guide rails 105 respectively, and the two scrapers 104 and two powder storage cases are respectively arranged at the front end and the rear end of the machining platform 109. In this way, when using the scrapers 104 to spread metal powder, it is possible to interactively operate the two scrapers 104, and thus the spreading efficiency is increased greatly.

In order to detect the thickness of the metal powder layer spread on the machining platform 109, in this embodiment, sensors 107 are arranged on two sides of the machining platform 109 respectively, and the sensors 107 are configured for detecting the thickness of the metal powder layer spread on the machining platform 109. Information detected by the sensor 107 is fed back to a control center, and the control center further adjusts the gap between the machining platform 109 and the scraper 104.

In specific, in order to detect the thickness of the metal powder layer more accurately, in this embodiment, a plurality of aforesaid sensors 107 are respectively arranged on two sides of the machining platform 109 and extend along a side edge of the machining platform 109.

The electron beam emitting structures each 101 include an electron beam generator and a coil. Wherein, the electron beam generator emits an electron beam, and the emitted electron beam in turn passes through a magnetic field generated by energizing the coil. In this way, by adjusting the magnetic field generated by the coil, a transmitting path of the electron beam can be changed, and thus the movement of the electron beam in the horizontal plane can be realized. According to the shape requirements for machining the approximate body components, the magnetic field generated by the coil can be correspondingly adjusted, such that a displacement of the electron beam is achieved.

In order to realize upward and downward movements of the machining platform 109, a lifting motor 111 is connected to a lower end of the machining platform 109. The machining platform 109 is driven by power provided by the lifting motor 111 to move up and down. Every time after the powder spreading device spreads a layer of metal powder on the machining platform 109, the lifting platform controls the machining platform 109 to lower a constant distance; in this way, a distance between focuses of the electron beams emitted by the electron beam emitting structures 101 and the metal powder layer keeps constant.

In this embodiment, the multi-electron-beam melting and milling composite 3D printing apparatus 1 further includes a metal powder recovering structure, the metal powder recovering structure configured for recovering the residual metal powder on the base 100 after machining. In this way, the cyclic utilization of the metal powder is facilitated.

In specific, the metal powder recovering structure includes a recovering case 110, and the recovering case 110 defines a recovering cavity configured for receiving the recovered metal powder therein. The recovering case 110 is located below the base 100, the base 100 defines a recovering opening 106 therein, and the recovering opening 106 is communicated with the recovering cavity of the recovering case 110. In this way, after machining, the residual metal powder on the base 100 can enter the recovering cavity of the recovering case 110 via the recovering opening, and the metal powder in the recovering cavity can be reused circularly after the residue therein is filtered out and removed.

In this embodiment, along the moving direction of the scraper 104 during the powder spreading process, the recovering opening 106 is arranged at the rear end of the machining platform 109. Alternatively, in the case that two scrapers 104 are configured to cooperatively execute an interactive powder spreading operation, the recovering openings 106 are respectively defined at the front end and the rear end of the machining platform 109.

During the machining process using the multi-electron-beam melting and milling composite 3D printing apparatus 1, in order to prevent the metal powder from being oxidized and thereby make the properties of the formed components be better, in this embodiment, the multi-electron-beam melting and milling composite 3D printing apparatus 1 further includes a machining chamber 107, and the machining chamber 107 has a machining space 1071 formed therein. The machining space is in a vacuum state, or the machining space 1071 is filled with inert gas. The base 100 is arranged in the machining space 1071 of the machining chamber 107; that is, the multi-electron-beam melting and milling composite 3D printing apparatus 1 is arranged in the machining space of the machining chamber 107 and to carry out the machining. In this way, it is possible to reduce the impact of environment on the melting or solidifying of the metal, and improve the machining and physical properties of the metal. Therefore, the metal electron beam melting 3D printing technology can obtain wider application space, and production and manufacturing of metal with high melting point can be provided with new methods and technical means.

In this embodiment, the milling head 102 is a laser milling head, which uses the laser milling head to emit a laser beam, and thereby mill the plurality of single-layer or multi-layer approximate bodies formed on the machining platform 109. Of course, in other embodiments, the milling head 102 can also use different machining methods such as electron beam milling, NC milling or the like.

Using the laser beam emitted by the laser milling head to mill the single-layer or multi-layer approximate bodies belongs to a non-contact milling machining, which avoids the defects existing in the direct contact machining of which a traditional tool directly contacts the single-layer or multi-layer approximate body, and the milling machining accuracy is improved greatly.

The laser milling head may have various arrangements. In this embodiment, the laser milling head is movable in a three-dimension space. A portal frame is arranged on the two guide rails 105, the portal frame includes two connecting arms arranged to be spaced from each other and a horizontal beam. Lower ends respectively of the two connecting arms are movably connected to the two guide rails 105 respectively, and are movable along the guide rails 105. The horizontal beam is connected to upper ends of the two connecting arms respectively. In this way, the horizontal beam stretches across the two guide rails 105. A moving terminal 112 is movably connected to the horizontal beam, and the moving terminal 112 is movable along the horizontal beam. A connecting plate is movably connected to the moving terminal. The connecting plate can move up and down with respect to the moving terminal, that is, move along the vertical direction, i.e., the Z direction. The laser milling head is connected to the connecting plate. In this way, when the connecting plate moves in the vertical direction, the laser milling head moves along therewith in the vertical direction. Thus, the laser milling head is movable in the three-dimension space.

Furthermore, the laser milling head is provided therein with a cooling line, and the cooling line is configured for allowing cooling water to flow through. In this way, by circulating the cooling water in the cooling line, the heat generated by the laser milling head during the whole working process can be brought away by means of the flow of the cooling water, and heat dissipation effect is provided. Therefore, it can ensure that the laser milling head has better working efficiency and properties.

Alternatively, in other embodiments, the laser milling head further includes a laser generator and a plurality of rotatably arranged polarizers. In this case, the laser generator is configured for generating a laser beam. The plurality of polarizers are spacedly arranged on a transmitting path of the laser beam, and are configured for reflecting the laser beam and thereby achieving a purpose of changing a transmitting direction of the laser beam in such a way that the laser beam is perpendicularly incident onto the machining platform 109. Furthermore, by the rotation adjustment of the plurality of polarizers, a position of the laser beam can be changed; that is, the movement of the laser beam in the horizontal plane can be realized.

In this embodiment, in order to achieve automatic control of the plurality of polarizers, the laser milling head further includes a polarization controller, and the polarization controller is configured for controlling the rotation adjustment of the plurality of polarizers. Of course, the polarization controller may be embedded with control program according to the machining requirements. The polarization controller carries out different rotation adjustments for different polarizers according to different machining.

The plurality of polarizers are arranged in an accommodating box. The laser emitted by the laser generator enters the accommodating box, is reflected by the plurality of polarizers, and exits from an exit opening of the accommodating box.

The multi-electron-beam melting and milling composite 3D printing apparatus 1 provided by this embodiment includes one milling head 102 and a plurality of electron beam emitting structures 101. Wherein, the number of the electron beam emitting structures 101 can be two, and can also be three, four, and so on.

The embodiments described above are only preferred embodiments of the present application, and are not used to limit the present application. Any modification, alternative or improvements made within the spirit and the principle of the present application should be included in the protection of the present application.

## Claims

1. A multi-electron-beam melting and milling composite 3D printing apparatus, comprising a base; **characterized in that** the base is provided thereon with a machining platform movable in a vertical direction; the base is further provided thereon with a powder spreading structure configured for spreading metal powder onto the machining platform to form a metal powder layer; a plurality of electron beam emitting structures and a milling head are arranged above the machining platform; the plurality of electron beam emitting structures are spacedly and circumferentially arranged outside the milling head; the plurality of electron beam emitting structures are configured for emitting electron beams to melt the metal powder layer formed on the machining platform in partitions and thereby form a plurality of single-layer or multi-layer approximate bodies; the milling head is configured for milling the plurality of single-layer or multi-layer approximate bodies formed on the machining platform, and integrally connecting the plurality of single-layer or multi-layer approximate bodies formed on the machining platform together.

2. The multi-electron-beam melting and milling composite 3D printing apparatus according to claim 1, **characterized in that** the electron beam emitting structures each includes an electron beam generator configured to emit an electron beam and a coil configured to be electrified to generate a magnetic field; the electron beam emitted by the electron beam generator passes through the magnetic field generated by the coil.

3. The multi-electron-beam melting and milling composite 3D printing apparatus according to claim 1, **characterized in that** the base is provided thereon with two guide rails arranged to be spaced from and parallel to each other; the machining platform is arranged between the two guide rails; the powder spreading device further includes a scrape and a powder leakage case located above the scraper; **characterized in that** two ends of the scraper are movably connected to the two guide rails respectively, and a gap is formed between a lower end of the scraper and the machining platform; the powder leakage case is further provided therein with a powder leakage cavity configured for receiving the metal powder, and a lower end of the powder leakage case defines a powder leakage hole; an upper end of the scraper is provided with a powder collection tank configured for collecting the metal powder falling from the powder leakage hole.

4. The multi-electron-beam melting and milling composite 3D printing apparatus according to claim 3, the powder spreading device includes two scrapers and two powder leakage cases; the two scrapers are respectively provided with a front end and a rear end of the machining platform, the two powder leakage cases are respectively arranged above the two scrapers.

5. The multi-electron-beam melting and milling composite 3D printing apparatus according to claim 1, **characterized in that** the base is provided thereon with two guide rails arranged to be spaced from and parallel to each other; the machining platform is arranged between the two guide rails; the powder spreading device further includes a scrape and a powder storage case; wherein two ends of the scraper are movably connected to the two guide rails respectively, and a gap is formed between a lower end of the scraper and the machining platform; the powder storage case includes a powder storage cavity having an opening at an upper end thereof and configured for receiving the metal powder; the base defines a through-hole aligned with the opening at the upper end of the powder storage cavity; a powder transporting platform movable in the vertical direction and configured for transporting the metal powder to the base is further arranged in the powder storage cavity of the powder storage case; the powder transporting platform is respectively aligned with the opening at the upper end of the powder storage cavity and the through-hole in the base.

6. The multi-electron-beam melting and milling composite 3D printing apparatus according to any one of claims 1-5, **characterized in that** sensors configured for detecting a thickness of the metal powder layer spread on the machining platform are respectively arranged on two sides of the machining platform.

7. The multi-electron-beam melting and milling composite 3D printing apparatus according to any one of claims 1-5, **characterized in that** the milling head is a laser milling head; a portal frame is movably connected with the two guide rails; the portal frame includes two connecting arms spaced from each other and a horizontal beam; lower ends respectively of the two connecting arms are movably connected to the two guide rails; two ends of the horizontal beam are connected to upper ends of the two connecting arms respectively; a moving terminal movable along the horizontal beam is movably connected to the horizontal beam, and a connecting plate that moves up and down with respect to the moving terminal is movably connected to the moving terminal; ; the laser milling head is connected to the connecting plate.

8. The multi-electron-beam melting and milling composite 3D printing apparatus according to claim 7, **characterized in that** the laser milling head is further provided therein with a cooling line configured for allowing cooling water to flow through.

9. The multi-electron-beam melting and milling composite 3D printing apparatus according to any one of claims 1-5, **characterized in that** the milling head is a laser milling head; the laser milling head includes a laser generator configured for emitting a laser beam and a plurality of polarizers configured for emitting the laser beam emitted by the laser generator; the plurality of polarizers are arranged in an accommodating box.

10. The multi-electron-beam melting and milling composite 3D printing apparatus according to any one of claims 1-5, **characterized in that** the multi-electron-beam melting and milling composite 3D printing apparatus further includes a recovering case, the recovering case includes a recovering cavity configured for allowing the apparatus to recover the metal powder on the base; the recovering case is located below the base, and the base further defines a recovering opening communicated with the recovering cavity.
